(19) Europäisches Patentamt
European Patent Office
Office européen des brevets

(11) Veröffentlichungsnummer : **0 069 300**
**B1**

(12) **EUROPÄISCHE PATENTSCHRIFT**

(45) Veröffentlichungstag der Patentschrift : **20.02.85**

(51) Int. Cl.[4] : **C 09 B 67/26**, D 06 P 1/38

(21) Anmeldenummer : **82105622.3**

(22) Anmeldetag : **25.06.82**

# (54) Flüssige Reaktivfarbstoffzubereitungen und ihre Verwendung.

(30) Priorität : **02.07.81 DE 3126081**

(43) Veröffentlichungstag der Anmeldung : **12.01.83 Patentblatt 83/02**

(45) Bekanntmachung des Hinweises auf die Patenterteilung : **20.02.85 Patentblatt 85/08**

(84) Benannte Vertragsstaaten : **BE CH DE FR GB IT LI**

(56) Entgegenhaltungen :
**EP-A- 0 024 654**
**CH-A- 490 468**
**DE-A- 2 520 527**
**DE-A- 2 529 658**
**FR-A- 2 264 850**
**FR-A- 2 267 352**
**FR-A- 2 316 287**
**GB-A- 1 063 063**

(73) Patentinhaber : **HOECHST AKTIENGESELLSCHAFT**
**Postfach 80 03 20**
**D-6230 Frankfurt am Main 80 (DE)**

(72) Erfinder : **Opitz, Konrad, Dr.**
**Schwedenstrasse 22**
**D-6237 Liederbach (DE)**

**EP 0 069 300 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Zum Färben und Bedrucken von stickstoffhaltigen Fasermaterialien, wie Wolle, Seide oder synthetischen Polyamidfasern, und vor allem von Fasermaterialien aus natürlicher oder regenerierter Cellulose werden in großem Umfang Reaktivfarbstoffe verwendet, die in Form trockener und nicht färbender Stellmittel enthaltender Pulver eingesetzt werden. Außer durch die unangenehme, auf der Pulverform beruhenden Staubentwicklung wird das Ansetzen von Druckpasten sowie von Klotz- und Färbeflotten mit solchen Farbstoffpulvern vor allem dadurch erschwert, daß viele der Farbstoffpulver wegen des Gehalts an mineralölhaltigen Entstaubungsmitteln, das auch zu öligen Abscheidungen führen kann, schlecht benetzen, zur Klumpenbildung neigen oder zu wenig löslich sind.

Diese Nachteile von Farbstoffpulvern machen sich bei denjenigen Färbeverfahren besonders unangenehm bemerkbar, bei denen es darauf ankommt, hohe Farbstoffkonzentrationen bei niedrigen Temperaturen zu erreichen, so z. B. beim Klotz-Kurzverweil-Verfahren. Hier sind flüssige Färbepräparationen erwünscht und den pulverförmigen deutlich überlegen. Mit Wasser als Lösemittel können aber nur von relativ gut löslichen Reaktivfarbstoffen Flüssigeinstellungen mit Farbstoffgehalten, die von praktischem Interesse sind, hergegestellt werden. Derartige Flüssigeinstellungen von Reaktivfarbstoffen sind bekannt, beispielsweise aus den Deutschen Patentschriften 2 417 255, 2 454 893 und 2 454 908.

Bei weniger gut löslichen Reaktivfarbstoffen ist Wasser als alleiniges Lösemittel für Flüssigeinstellungen mit Farbstoffgehalten von praktischer Bedeutung nicht geeignet, vielmehr müssen dann Lösevermittler wie ε-Caprolactam, Tetramethylharnstoff, Tetramethylensulfon, Dimethylformamid oder andere geeignete Substanzen zugesetzt werden. Solche flüssigen Färbepräparationen von Reaktivfarbstoffen sind in der Britischen Patentschrift 1 060 063 oder in der Deutschen Offenlegungsschrift 2 529 658 beschrieben.

Es hat sich nun aber gezeigt, daß bei einer Reihe von Reaktivfarbstoffen entweder die Löslichkeit so gering ist, daß trotz der Lösevermittler im Bereich praktisch interessanter Farbstoffgehalte keine vollständige Lösung erreicht wird, oder die Herstellung ausreichend konzentrierter Flüssigeinstellungen zunächst zwar möglich ist, diese aber unzureichende Lagerstabilitäten aufweisen. Die ungenügende Lagerstabilität macht sich dadurch bemerkbar, daß nach kürzerer oder längerer Zeit ungelöste Abscheidungen in Form von Bodensatz auftreten. Dadurch ist keine vollständige Homogenität der flüssigen Färbepräparation mehr gewährleistet und es besteht die Gefahr, daß Färbungen und Drucke mit unerwünschten Stippen oder mit ebenso unerwünschter schwankender Farbstärke erhalten werden.

Es wurde gefunden, daß diese Nachteile durch den Einsatz von anionischen Dispergiermitteln vermieden werden können. Die vorliegende Erfindung betriff deshalb stabile, wasserhaltige Lösungen von Reaktivfarbstoffen, enthaltend 5 bis 35, vorzugsweise 5 bis 25 Gew.-% eines oder mehrerer Farbstoffe, die in Form der freien Saüre der allgemeinen Formel (I)

$$(HO_3S)_m{-}{-}{-}\ F\ {-}{-}{-}Z_n \qquad (I)$$

entsprechen, in welcher

F den Rest eines Farbstoffchromophors eines bekannten Anthrachinon-, eines Mono-, Dis- oder Trisazofarbstoffes oder eines Phthalocyaninfarbstoffes darstellt, wobei sowohl die Phthalocyaninfarbstoffe als auch die Azofarbstoffe als Metallkomplexe mit Cu, Cr, Co, Ni oder Fe als komplexbildendes Zentralatom vorliegen können,

m eine ganze Zahl von 1 bis 8,

n eine ganze Zahl von 1 bis 3 bedeuten und

Z für eine faserreaktive Gruppe der Monohalogen-symm. triazinyl-, Mono-, Di- oder Trihalogenpyrimidin-, Mono- oder Dichlor-chinoxalin- oder Dichlorphthalazin-, Dichlorchinazolin- oder Dichlorpyridazon-Reihe oder deren Brom- oder Fluorderivate, der sulfonylgruppenhaltigen Triazinyl-, der sulfonylgruppenhaltigen Pyrimidin- oder ammoniumgruppenhaltigen Triazinyl-Reihe oder der Pyrimidin- oder ammoniumgruppenhaltigen Triazinyl-Reihe oder der aliphatischen Reihe steht,

5 bis 25, vorzugsweise 10 bis 25 Gew.-% eines Lösevermittlers, der zu keiner die Farbstärke mindernden chemischen Reaktion mit dem Farbstoff, insbesondere den Reaktivgruppen Z, befähigt ist,

1 bis 6, vorzugsweise 1 bis 4 Gew.-% Puffersubstanzen, die zu keiner die Farbstärke mindernden chemischen Reaktion mit den faserreaktiven Gruppen Z fähig sind,

sowie einen pH-Wert von 3 bis 7, vorzugsweise von 4,5 bis 6,5, welche dadurch gekennzeichnet ist, daß sie zusätzlich 1 bis 20, vorzugsweise 1 bis 10 Gew.-% eines Sulfobernsteinsäurehalbesters oder Sulfobernsteinsäureamids enthält.

Lösungen mit 10 bis 25 Gew.-% Farbstoffgehalt sind besonders bevorzugt. Besonders vorteilhaft ist die Erfindung für diejenigen Farbstoffe der obigen Formel (I), bei denen m = 1 oder 2 ist, die also am Rest F nur 1 oder 2 Sulfogruppen enthalten.

Bevorzugt sind weiterhin Farbstoffe, deren faserreaktive Gruppe Z der aliphatischen Reihe angehört, wie Vinylsulfonyl, β-Chlorethylsulfonyl, β-Acetoxyethylsulfonyl, β-(3-Sulfobenzoyloxy)-ethylsulfonyl, β-Sulfatoethylsulfonyl, β-Thiosulfatoethylsulfonyl, β-Phosphatoethylsulfonyl, β-Sulfatoethylsulfonylmethylamino oder Vinylsulfonylmethylamino.

Als Lösevermittler sind bevorzugt die polaren Lösemittel Tetramethylharnstoff, Dimethylformamid, N-Methylacetamid, Dimethylsulfoxid, Tetramethylensulfon, N-Methylpyrrolidon, Phosphorsäure-tris(dimethyl)-amid, Diethylenglykoldimethylether und analoge Verbindungen, insbesondere jedoch ε-Caprolactam.

Erfindungsgemäße Farbstofflösungen, die einen oder mehrere Farbstoffe mit einem Vinylsulfonyl-, β-Sulfatoethylsulfonyl-, β-Thiosulfatoethylsulfonyl- oder β-Acetoethylsulfonylrest enthalten, sind besonders bevorzugt.

Die Farbstofflösungen enthalten anionische Dispergiermittel in Form von Sulfobernsteinsäurehalbestern, wie sie aus der DE-PS 21 32 403 bekannt sind, oder Sulfobernsteinsäureamiden, deren hydrophober Rest sich von einem Fettamin ableitet.

Geeignete Puffersubstanzen sind beispielsweise Natrium- und Kaliumacetat, Natrium- und Kaliumoxalat, die verschiedenen primären, sekundären und tertiären Natrium- und Kaliumsalze der Phosphorsäure oder deren Mischungen sowie Natriumborat. Bevorzugt sind hiervon Natriumborat und primäres und sekundäres Natriumphosphat.

Besonders bevorzugt sind Lösungen des Farbstoffs C. I. Reactive Yellow 37, die 5 bis 25 Gew.-% dieses Farbstoffs, 5 bis 25, vorzugsweise 10 bis 20 Gew.-% ε-Caprolactam, 1 bis 10, vorzugsweise 1 bis 5 Gew.-% eines Sulfobernsteinsäurehalbesters oder Sulfobernsteinsäureamids und 1 bis 6 Gew.-% Puffersubstanzen enthalten, sowie einen pH-Wert von 3 bis 5, vorzugsweise von 4,5 bis 6,5 aufweisen.

Die Herstellung der erfindungsgemäßen Farbstofflösungen erfolgt durch Lösen der Reaktivfarbstoffe in Wasser unter Mitverwendung der obengenannten Lösevermittler, anionischen Dispergiermittel und Puffersubstanzen. Lösungen ohne Zusatz de anionischen Dispergiermittel (Sulfobernsteinsäurederivat) zeigen nach kürzerer oder längerer Lagerung Farbstoffabscheidungen, deren Ursache entweder anfangs übersättigte Lösungen oder während der Lagerung gebildete schwerer lösliche Farbstoffanteile sein können.

Diese Farbstoffabscheidungen können stippige Färbungen und Drucke verursachen und der Grund für Färbungen und Drucke mit schwankender Farbstärke sein, da bei flüssigen Färbepräparationen mit Bodensatz keine zuverlässige Homogenität gewährleistet ist.

Im einzelnen erfolgt die Herstellung so, daß die Reaktivfarbstoffsalze in trockener oder feuchter Form, beispielsweise als feuchter Filterkuchen, zusammen mit der Puffersubstanz bei Raumtemperatur ode erhöhter Temperatur bis 50 °C in einer wäßrigen Lösung des löslichkeitserhöhenden Zusatzstoffes (Lösevermittlers) und des anionischen Dispergiermittels verrührt, gelöst und gegebenenfalls geklärt werden.

Eine weitere Herstellungsmöglichkeit besteht darin, den löslichkeitserhöhenden Zusatzstoff, das anionische Dispergiermittel und die Puffersubstanz der am Ende der Farbstoffsynthese vorliegenden Farbstofflösung oder -suspension zuzusetzen und gegebenenfalls zur Erreichung eines höheren Farbstoffgehaltes entweder einen Teil des Wasser unter vermindertem Druck abzudestillieren oder zusätzlich festen Reaktivfarbstoff, der durch Trocknung eines Teils der bei der Synthese erhaltenen Lösung erhalten wurde, einzutragen und zu lösen.

Die erfindungsgemäßen Reaktivfarbstofflösungen sind besonders lagerstabil und führen auch nach mehrwöchiger Lagerung bei erhöhter Temperatur oder mehrmonatiger Lagerung bei Raumtemperatur zu keiner Farbstoffausfällung. Außerdem bleibt die Reaktivität der Farbstoffe unbeeinträchtigt, so daß keine Farbstärkeverluste auftreten.

Aufgrund dieser vorteilhaften Eigenschaften sind die erfindungsgemäßen Farbstofflösungen zum Färben und Bedrucken von natürlichen, wie Wolle und Seide, und synthetischen Polyamidfasermaterialien oder Fasermaterialien aus natürlicher oder regenerierter Cellulose, wie Baumwolle, Leinen, Zellwolle und Viskoseseide, sowie Fasermischungen, die eine oder mehrere der genannten Faserarten enthalten, besonders gut geeignet. Die erfindungsgemäßen Farbstofflösungen eignen sich insbesondere zur Bereitung von Klotz- und Färbeflotten sowie Druckpasten.

Die nachstehenden Beispiele dienen zur Erläuterung der Erfindung. Die angegebenen Teile und Prozentangaben beziehen sich auf das Gewicht.

## Beispiel 1

59 Teile pulverförmiges C. I. Reactive Yellow 37 mit einem Reinfarbstoffgehalt von 70 % wurden in eine Lösung von 8 Teilen Dinatriumhydrogenphosphat, 60 Teilen ε-Caprolactam und 20 Teilen einer 35 gewichtsprozentigen wäßrigen Lösung des Sulfobernsteinsäurederivats des Talgfettalkylamins der Formel

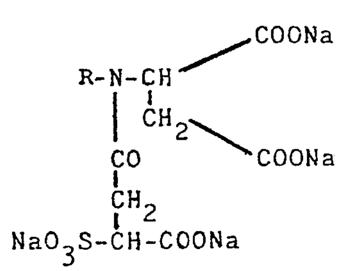

(R steht für ein Gemisch von Fettalkylresten mit folgender Kettenverteilung : $C_{14}$ etwa 5 %, $C_{16}$ etwa 30 %, $C_{18}$/$C_{18}$ ungesättigt etwa 65 %)

im folgenden als « Dispergiermittel I » bezeichnet, in 240 Teilen Wasser eingetragen. Nach mehrstündigem Rühren bei 50 °C und Abkühlen auf Raumtemperatur wird die Lösung mit weiterem Wasser auf 400 Teile eingestellt. Die resultierende Lösung enthält 10,3 Gew.-% Reinfarbstoff C. I. Reactive Yellow 37 und weist einen pH-Wert von 6,3 bei 20 °C auf.

Diese Lösung ist im geschlossenen Gefäß mindestens 3 Monate bei 20 °C oder 6 Wochen bei 50 °C lagerstabil, während eine entsprechende Färbepräparation mit gleicher Farbstoffkonzentration, die ohne Dispergiermittel I hergestellt wurde, bereits nach 1 bis 3 Tagen deutliche Farbstoffabscheidungen zeigt.

Mit 4 Teilen dieser pH-stabilisierten Lösung wurden jeweils Färbebäder. Klotzflotten und Druckpasten in bekannter und üblicher Weise hergestellt, die, in der für Reaktivfarbstoffe üblichen Weise auf Baumwolle appliziert und fixiert, gelbe Färbungen und Drucke ergaben, die genauso farbstark waren wie diejenigen, die unter entsprechender Verwendung gleichkonzentrierter Färbebäder, Klotzflotten oder Druckpasten. mit 1 Teil einer 41,2 Gew.-% Reinfarbstoff enthaltenden Pulvereinstellung hergestellt wurden.

Beispiel 2

523 Teile einer wäßrigen, geklärten Farbstofflösung von C. I. Reactiv Yellow 37 mit einem pH-Wert von 5,5 und einem Farbstoffgehalt von 7,9 Gew.-%, die in üblicher Weise bei der Synthese des Farbstoffs durch Diazotieren und Kuppeln der entsprechenden Ausgangsverbindungen erhalten wurde, wurden mit 8 Teilen Natriumoxalat, 60 Teilen ε-Caprolactam und 20 Teilen einer 35 gewichtsprozentigen wäßrigen Lösung des Dispergiermittels I versetzt. Von dieser Lösung wurden unter Rühren bei 50 °C und einem Druck von 24 mbar 111 Gewichtsteile Wasser abdestilliert. Die resultierenden 400 Teile Farbstofflösung enthielten 10,3 Gew.-% Reinfarbstoff C. I. Reactive Yellow 37 und wiesen einen pH-Wert von 6,1 auf.

Die Lösung besaß dieselben vorteilhaften Eigenschaften wie die im Beispiel 1 beschriebene.

Beispiel 3

Ersetzte man im Beispiel 1 die 8 Teile Dinatriumhydrogenphosphat durch 12 Teile Natriumborat und verfuhr im übrigen wie in Beispiel 1 beschrieben, so erhielt man 400 Teile einer Farbstofflösung, die bei 20 °C einen pH-Wert von 5,9 aufwies und dieselben vorteilhaften Eigenschaften zeigte.

Beispiel 4

Ersetzte man im Beispiel 1 die 8 Teile Dinatriumhydrogenphosphat durch 15 Teile Natriumacetat und verfuhr im übrigen wie in Beispiel 1 beschrieben, so erhielt man 400 Teile einer Farbstofflösung, die bei 20 °C einen pH-Werk von 6,1 aufwies und dieselben vorteilhaften Eigenschaften zeigte.

Beispiel 5

Ersetzte man im Beispiel 1 die 20 Teile der 35 gewichtsprozentigen wäßrigen Lösung des Dispergiermittels I durch 25 Teile einer ebenfalls 35 gewichtsprozentigen wäßrigen Lösung des aus Beispiel B DE-PS 2 132 403 bekannten Sulfobernsteinsäurehalbesters (im folgenden « Dispergiermittel II ») und verhuhr im übrigen wie im Beispiel 1 beschrieben, so resultierte eine Lösung mit denselben vorteilhaften Eigenschaften.

Beispiel 6

Ersetzte man im Beispiel 1 die 20 Teile der 35 gewichtsprozentigen wäßrigen Lösung von Dispergiermittel I durch 10 Teile eines Sulfobernsteinsäurehalbesters, der durch Umsetzung von einem mit 105 Mol Ethylenoxid oxyethylierten Novolak, der 7 über Methylenbrücken verknüpfte Nonylphenolreste enthält, mit Maleinsäureanhydrid und Natriumsulfit analogder Substanz 24 der DE-PS 2 132 403 hergestellt wurde, so erhielt man eine lagerstabile Farbstofflösung.

Beispiel 7

70 Teile pulverförmiges C. I. Reactive Red 174 mit einem Reinfarbstoffgehalt von 71,5 Gew.-% wurden in eine Lösung von 6 Teilen Dinatriumhydrogenphosphat, 60 Teilen ε-Caprolactam und 20 Teilen einer 35 gewichtsprozentigen wäßrigen Lösung von Dispergiermittel II in 240 Teilen Wasser eingetragen und durch mehrstündiges Rühren bei 50 °C gelöst. Nach Abkühlung auf 20 °C wurde mit weiterem Wasser auf 400 Teile eingestellt und von ungelösten Verunreinigungen geklärt. Die resultierende Lösung enthielt 12,5 Gewichtsprozent Reinfarbstoff C. I. Reactive Red 174 und wies einen pH-Wert von 6,0 bei 20 °C auf.

Die Farbstofflösung war im geschlossenen Gefäß mindestens 3 Monate bei Raumtemperatur oder 6

Wochen bei 50 °C lagerstabil, während eine entsprechende Färbepräparation mit gleicher Farbstoffkonzentration, die ohne Dispergiermittel II hergestellt wurde, bereits nach wenigen Tagen deutliche Farbstoffabscheidungen zeigte.

Mit 4 Teilen dieser pH-stabilisierten Lösung wurden jeweils Färbebäder, Klotzflotten und Druckpasten in bekannter und üblicher Weise hergestellt, die, in der für Reaktivfarbstoffe üblichen Weise auf Baumwolle appliziert und fixiert, rote Färbungen und Drucke ergaben, die genauso farbstark waren wie diejenigen, die unter entsprechender Verwendung gleichkonzentrierter Färbebäder, Klotzflotten und Druckpasten mit 1 Teil einer 50 Gew.-% Reinfarbstoff enthaltenden Pulvereinstellung hergestellt wurden.

### Beispiel 8

75 Teile pulverförmiges C. I. Reactive Red 180 mit einem Reinfarbstoffgehalt von 67 % wurden in eine Lösung von 8 Teilen Dinatriumhydrogenphosphat, 50 Teilen Diethylenglykoldimethylether und 20 Teilen einer 35 gewichtsprozentigen wäßrigen Lösung von Dispergiermittel I in 250 Teilen Wasser eingetragen und durch mehrstündiges Rühren bei 50 °C gelöst. Nach Abkühlung auf 20 °C wurde mit weiterem Wasser auf 400 Teile eingestellt und von ungelösten Verunreinigungen geklärt.

Die resultierende Farbstofflösung enthielt 12,5 Gew.-% Reinfarbstoff C. I. Reactive Red 180, wies bei 20 °C einen pH-Wert von 6,2 auf und besaß dieselben vorteilhaften Eigenschaften wie die in den Beispielen 1 oder 7 beschriebenen Lösungen.

## Ansprüche

1. Wasserhaltige Lösung von Reaktivfarbstoffen, enthaltend

5 bis 35 Gew.-% eines oder mehrerer Farbstoffe, die in Form der freien Säure der allgemeinen Formel (I)

$$(HO_3S)_m{-}{-}{-}F{-}{-}{-}\ Z_n \qquad (I)$$

entsprechen, in welcher

F den Rest eines Farbstoffchromophors eines bekannten Anthrachinon-, eines Mono-, Dis- oder Trisazofarbstoffes oder eines Phthalocyaninfarbstoffes darstellt,

m eine ganze Zahl von 1 bis 8,

n eine ganze Zahl von 1 bis 3 bedeuten und

Z für eine faserreaktive Gruppe der Monohalogensymm. triazinyl-, Mono-, Di- oder Trihalogenpyrimidin-, Mono- oder Dichlor-chinoxalin- oder Dichlorphthalazin-, Dichlorchinazolin- oder Dichlorpyridazon-Reihe oder deren Brom- oder Fluorderivate, der sulfonylgruppenhaltigen Triazinyl-, der sulfonylgruppenhaltigen Pyrimidin- oder ammoniumgruppenhaltigen Triazinyl-Reihe oder der Pyrimidin- oder ammoniumgruppenhaltigen Triazinyl-Reihe oder der aliphatischen Reihe steht,

5 bis 25 Gew.-% eines Lösevermittlers,

1 bis 6 Gew.-% Puffersubstanzen, die zu keiner die Farbstärke mindernden chemischen Reaktion mit den faserreaktiven Gruppen Z fähig sind,

sowie einen pH-Wert von 3 bis 7,

dadurch gekennzeichnet, daß sie zusätzlich 1 bis 20 Gew.-% eines Sulfobernsteinsäurehalbesters oder Sulfobernsteinsäureamids enthält.

2. Farbstofflösung nach Anspruch 1, gekennzeichnet durch einen Gehalt an Farbstoffen der Formel (I), in welcher Z für eine faserreaktive Gruppe aus der Reihe Vinylsulfonyl, β-Chlorethylsulfonyl, β-Acetoxyethylsulfonyl, β-(3-Sulfobenzoyloxy)-ethylsulfonyl, β-Sulfatoethylsulfonyl, β-Thiosulfatoethylsulfonyl, β-Phosphatoethylsulfonyl, β-Sulfatoethylsulfonylmethylamino und Vinylsulfonylmethylamino steht.

3. Farbstofflösung nach Anspruch 1, gekennzeichnet durch einen Gehalt an einem oder mehreren Lösevermittlern aus der Reihe Tetramethylharnstoff, Dimethylformamid, N-Methylacetamid, Dimethylsulfoxid, Tetramethylensulfon, N-Methylpyrrolidon, Diethylenglykoldimethylether und Phosphorsäure-tris(dimethyl)-amid und ε-Caprolactam.

4. Farbstofflösung nach Anspruch 1, gekennzeichnet durch einen Gehalt an 5 bis 25 Gew.-% des Farbstoffs C. I. Reactive Yellow 37, 5 bis 25 Gew.-% ε-Caprolactam, 1 bis 10 Gew.-% eines Sulfobernsteinsäurehalbesters oder Sulfobernsteinsäureamids und 1 bis 6 Gew.-% Puffersubstanzen sowie einen pH-Wert von 3 bis 7.

5. Verwendung der Farbstofflösung nach Anspruch 1 bis 4 zum Färben und Bedrucken von Fasermaterialien aus Wolle, Seide, Polyamid und natürlicher oder regenerierter Celulose oder von Fasermischungen, die eine oder mehrere der genannten Faserarten enthalten.

## Claims

1. A water-containing solution of reactive dyestuffs, containing

from 5 to 35 weight % of one or several dyestuffs, which in the form of the free acid correspond to the formula (I)

$$(HO_3S)_m---F---Z_n \quad (I)$$

wherein

F is the radical of a chromophore of a known anthraquinone, mono-, dis- or trisazo dyestuff or of a phthalocyanine dyestuff,

m is an integer of from 1 to 8,

n is an integer of from 1 to 3 and

Z is a fiber reactive group selected from the series of monohalogen-symmetric-triazinyl, mono-, di- or trihalogen pyrimidine, mono- or dichloroquinoxaline or dichlorophthalazine, dichloroquinazoline or dichloropyridazone or of bromine or fluorine derivatives thereof, of the series of sulfonyl group(s)-containing triazinyl, of sulfonyl group(s)-containing pyrimidine or of ammonium group(s)-containing triazinyl or of the series of pyrimidine- or ammonium group(s)-containing triazinyl, or of the aliphatic series,

from 5 to 25 weight % of a dissolving mediator, and

from 1 to 6 weight % of buffer substances uncapable of reacting with the fiber reactive groups Z so as to reduce the tinctorial strength,

and having a pH of from 3 to 7,

characterized by an additional content of from 1 to 20 weight % of a sulfosuccinic acid semiester or of a sulfosuccinic acid amide.

2. The dyestuff solution of claim 1, characterized by a content of dyestuffs of formula (I), wherein Z is a fiber-reactive group of the series of vinylsulfonyl, β-chloroethylsulfonyl, β-acetoxyethylsulfonyl, β-(3-sulfobenzoyloxy)-ethylsulfonyl, β-sulfatoethylsulfonyl, β-thiosulfatoethylsulfonyl, β-phosphatoethylsulfonyl, β-sulfatoethylsulfonylmethylamino and vinylsulfonylmethylamino.

3. The dyestuff solution of claim 1, characterized by a content of one or several dissolving mediators of the series of tetramethyl urea, dimethyl formamide, N-methylacetamide, dimethyl sulfoxide, tetramethylene sulfone, N-methyl pyrrolidone, diethylene glycol dimethyl ether and phosphoric acid tris(dimethyl)amide and ε-caprolactam.

4. The dyestuff solution of claim 1, characterized by a content of from 5 to 25 weight % of the dyestuff C. I. Reactive Yellow 37, of from 5 to 25 weight % of ε-caprolactam, of from 1 to 10 weight % of a sulfosuccinic acid semiester or of a sulfosuccinic acid amide, and of from 1 to 6 weight % of buffer substances, and characterized by a pH of from 3 to 7.

5. Method of using the dyestuff solution of claims 1 to 5 for dyeing and printing fiber material made from wool, silk, polyamide and natural or regenerated cellulose or from fiber mixtures containing one or several of said fibers.

## Revendications

1. Solution aqueuse de colorants réactifs, contenant 5 à 35 % en poids d'un ou plusieurs colorants, correspondant, sous la forme de l'acide libre, à la formule générale I

$$(HO_3S)_m---F---Z_n \quad (I)$$

où

F est le résidu d'un chromophore d'un colorant anthraquinonique connu, d'un colorant mono-, dis- ou trisazoïque ou d'un colorant de phtalocyanine,

m est un nombre entier de 1 à 8,

n est un nombre entier de 1 à 3 et

Z est un groupe réactif vis-à-vis de la fibre de la série monohalogéno-sym-triazinylique, mono-, di- ou trihalogéno-pyrimidinique, mono- ou dichloroquinoxalinique ou dichlorophtalazinique, dichloroquinazolinique ou dichloropyridazonique, ou leurs dérivés bromés ou fluorés, de la série triazinylique contenant des groupes sulfonyle, de la série pyrimidinique contenant des groupes sulfonyle ou triazinylique contenant des groupes ammonium ou de la série pyrimidinique ou triazinylique contenant des groupes ammonium, ou de la série aliphatique,

5 à 25 % en poids d'un tiers-solvant,

1 à 6 % en poids de substances tampon qui ne sont susceptibles d'aucune réaction chimique, sur les groupes Z réactifs à l'égard de la fibre diminuant le rapport de concentration,

et avec un pH de 3 à 7,

caractérisée en ce qu'elle contient en outre 1 à 20 % en poids d'un semi-ester de l'acide sulfosuccinique ou de sulfosuccinamide.

2. Solution colorante selon la revendication 1, caractérisée en ce qu'elle contient des colorants de formule I où Z est un groupe réactif à l'égard de la fibre de la série vinylsulfonyle, β-chloréthylsulfonyle, β-

acétoxyéthylsulfonyle, β-(sulfo-3 benzoyloxy)éthylsulfonyle, β-sulfatoéthylsulfonyle, β-thiosulfatoéthylsulfonyle, β-phosphatoéthylsulfonyle, β-sulfatoéthylsulfonylméthylamino et vinylsulfonylméthylamino.

3. Solution colorante selon la revendication 1, caractérisée en ce qu'elle contient un ou plusieurs tiers-solvants de la série tétraméthylurée, diméthylformamide, N-méthylacétamide, diméthylsulfoxyde, tétraméthylènesulfone, N-méthylpyrrolidone, éther diméthylique du diéthylèneglycol et phospho-tris(diméthyl)-amide et ε-caprolactame.

4. Solution colorante selon la revendication 1, caractérisée en ce qu'elle contient 5 à 25 % en poids du colorant CI Reactive Yellow 37, 5 à 25 % en poids d'ε-caprolactame, 1 à 10 % en poids d'un semi-ester de l'acide sulfosuccinique ou de sulfosuccinamide et 1 à 6 % en poids de substances tampon, avec un pH de 3 à 7.

5. Utilisation de la solution colorante selon l'une des revendications 1 à 4 pour la teinture et l'impression de matières en fibres, en laine, soie, polyamide et cellulose naturelle ou régénérée, ou de mélanges de fibres contenant un ou plusieurs des types de fibres mentionnés.